Europäisches Patentamt

European Patent Office

Office européen des brevets

(11) Numéro de publication: **0 418 158 A1**

## (12) DEMANDE DE BREVET EUROPEEN

(21) Numéro de dépôt: 90402524.4

(22) Date de dépôt: 13.09.90

(51) Int. Cl.⁵: **C10C 3/02**, C08L 95/00, E01C 19/10

(30) Priorité: 15.09.89 FR 8912111

(43) Date de publication de la demande:
20.03.91 Bulletin 91/12

(84) Etats contractants désignés:
AT BE CH DE DK ES FR GB GR IT LI LU NL SE

(71) Demandeur: ENTREPRISE JEAN LEFEBVRE
11, Bld Jean-Mermoz B.P. 139
F-92202 Neuilly-sur-Seine Cédex(FR)

(72) Inventeur: Rivoire, Jean
59 rue Henri Béqué
F-78160 Marly Le Roi(FR)

(74) Mandataire: Ahner, Francis et al
CABINET REGIMBEAU, 26, avenue Kléber
F-75116 Paris(FR)

(54) Procédé et installation de fabrication de liants modifies à usage routier.

(57) La présente invention a pour objet un procédé et une installation de fabrication de liant hydrocarboné modifié par des additifs de synthèse en vue de ses applications routières.

L'installation selon l'invention comprend en série :
- des moyens d'alimentation en liant hydrocarboné (10, 12, 14) ;
- un échangeur de chaleur en ligne (16) ;
- un prémélangeur (18) d'axe incliné vers le bas dans le sens d'avancement des produits à mélanger, qui est couplé au voisinage de l'entrée du liant à au moins un réservoir d'additifs (20) ;
- au moins un digesteur (30) se présentant sous la forme d'une cuve d'axe vertical équipée de moyens d'agitation à double flux ;
- un broyeur à haute énergie de cisaillement (42), et
- un poste de stockage (50) et/ou de chargement (52) des additifs modifiés.

EP 0 418 158 A1

EP 0 418 158 A1

La présente invention concerne un procédé et une installation pour la fabrication de liants modifiés destinés à être utilisés dans les travaux de construction et d'entretien routiers.

Dans la technique antérieure, ce type de liants spéciaux étaient fabriqués à partir de produits de base liquides ou solides mélangés par malaxage dans des cuves fermées, après passage dans des pompes doseuses. Les techniques routières font appel à ce type de liants modifiés notamment par adjonction de polymères, car ils permettent d'influer sur certaines propriétés fondamentales des liants de base, par exemple la susceptibilité thermique, la cohésion, l'élasticité et la résistance à la fatigue.

Il s'est avéré que le processus de modification des liants de base était beaucoup plus complexe que l'on ne pouvait l'imaginer a priori.

En effet, la dispersion du polymère au sein du liant de base ne constitue que la toute première étape d'un processus de modification beaucoup plus élaboré qui, selon les conditions de mélangeage, se poursuit par une ou plusieurs des étapes suivantes :
- dissolution partielle ou totale du polymère ;
- gonflement du polymère qui absorbe une fraction du liant de base, et
- réaction chimique du polymère avec le liant de base généralement sous l'action d'un catalyseur de greffage.

Au cours de ces différentes étapes, un certain nombre de phénomènes physiques et chimiques se superposent généralement. Dans la technique antérieure, il s'est avéré totalement impossible de contrôler la température à laquelle on réalise le mélange, de maîtriser l'énergie mobilisée pour assurer ce mélange, d'éviter les phénomènes de surchauffe au voisinage des parois de cuves, ce qui engendrait une dégradation des polymères.

Ces mêmes phénomènes de surchauffe conduisaient également à un encroûtage des parois sur lesquelles se déposent des produits cokéfiés responsables d'importantes diminutions de rendement thermique.

A tous ces inconvénients, s'ajoute encore le fait que cette technique était obligatoirement mise en oeuvre de façon discontinue.

Elle ne permettait de traiter que de faibles quantités de produits et nécessitait de très longues durées de mélangeage.

A titre d'exemple, la production d'environ 20 tonnes de liants spéciaux nécessitait 4 à 6 heures de malaxage au sein d'une cuve fermée.

La présente invention a précisément eu pour but d'écarter tous les inconvénients précités de la technique antérieure.

De surcroît, le procédé et l'installation selon l'invention ont permis d'obtenir des liants spéciaux de qualité nettement améliorée par rapport aux meilleurs produits qu'il était possible d'obtenir jusqu'à ce jour.

L'amélioration de la structure des mélanges bitume-polymère a notamment pu être observée au microscope.

Des mesures de consistance, de traction, de cohésion, de résilience et du module, ont démontré les avantages de l'objet de la présente invention.

Le procédé selon l'invention est caractérisé en ce que l'on effectue les opérations successives suivantes :
- préchauffage du liant hydrocarboné dans une gamme de températures préférentielles comprises entre 150°C et 200°C ;
- prémélange du liant hydrocarboné et des additifs de synthèse ;
- mûrissement du mélange ;
- homogénéisation dudit mélange par broyage, et
- récupération du liant modifié.

La présente invention s'étend également à l'installation de transformation permettant la mise en oeuvre du procédé ci-dessus.

Cette installation est caractérisée en ce qu'elle comprend en série :
- des moyens d'alimentation en liant hydrocarboné ;
- un échangeur de chaleur en ligne ;
- un prémélangeur d'axe incliné vers le bas dans le sens d'avancement des produits à mélanger, qui est couplé au voisinage de l'entrée du liant à au moins un réservoir d'additifs ;
- au moins un digesteur se présentant sous la forme d'une cuve d'axe vertical équipée de moyens d'agitation à double flux ;
- un broyeur à haute énergie de cisaillement, et
-un poste de stockage et/ou de chargement des additifs modifiés.

D'autres caractéristiques et avantages de la présente invention apparaîtront à la lecture de la

2

description détaillée faite ci-après en s'appuyant sur des exemples particuliers de mise en oeuvre, et en regard des dessins annexés sur lesquels :

- la figure 1 représente le schéma général d'implantation d'une installation de transformation ;
- la figure 2 illustre la structure et le fonctionnement du prémélangeur au niveau duquel les additifs et le liant hydrocarboné entrent en contact ;
- la figure 3 représente un digesteur équipé de ces moyens d'agitation à double flux, au niveau duquel on observe le mûrissement du mélange liant-additif ;
- la figure 4 illustre schématiquement le broyeur à haute énergie de cisaillement qui permet, le cas échéant, de réaliser l'inversion de phases du mélange, i.e. le passage d'une matrice bitume à une matrice polymère,
- les figures 5a et 5b représentent des photographies prises au microscope (grossissement 250 fois) respectivement d'une dispersion de polymère dans le bitume et d'une dispersion inverse de bitume dans le polymère.
- les figures 6.1, 6.2 et 6.3 représentent la micro-morphologie de trois types différents de bitumes modifiés obtenus selon la technique antérieure et les figures 7.1, 7.2 et 7.3 représentent la micro-morphologie de ces mêmes bitumes modifiés fabriqués selon l'invention.

La première étape du procédé de fabrication selon l'invention consiste à préchauffer le liant hydrocarboné, avant d'y introduire les divers additifs de synthèse.

La température de préchauffage, ou température de régulation, qui sera pratiquement conservée identique durant tout le processus de transformation, sera choisie en fonction de la nature des additifs utilisés.

Pour optimiser le procédé de transformation, il convient d'opérer aux températures les plus élevées possible, en pratique dans une gamme de températures comprises entre 180 et 190° C.

Pour la plupart des additifs de nature polymere ou copolymère, la température de préchauffage sera avantageusement comprise entre 180 et 190° C.

Cette température du liant hydrocarboné doit permettre d'assurer une bonne fusion des additifs polymères ou copolymères, sans toutefois risquer de provoquer leur décomposition.

Par exemple, dans le cas particulier de l'addition aux liants hydrocarbonés d'une huile anthracénique de fluxage ou d'une huile de pétrole, la température de préchauffage sera voisine de 150° C, voire plus basse en fonction du point éclair de l'additif d'origine houillère utilisé.

Il convient ici d'apporter un certain nombre de précisions quant à la nature et aux propriétés des différents constituants des liants spéciaux obtenus dans le cadre de la présente invention.

Les liants hydrocarbonés utilisés dans le cadre de la présente invention seront généralement constitués par des produits d'origine bitumineuse, c'est-à-dire des bitumes de distillation directe.

On fera essentiellement appel dans la pratique à quatre grades différents, à savoir 40/50 - 60/70 - 80/100 et 180/220. Ces grades de bitume sont utilisés soit isolément, soit en mélange entre eux dans des proportions qui peuvent varier en fonction de l'application particulière recherchée.

Ces liants hydrocarbonés pourront également être constitués par des mélanges de bitume et de produits d'origine houillère, en particulier des goudrons de houille.

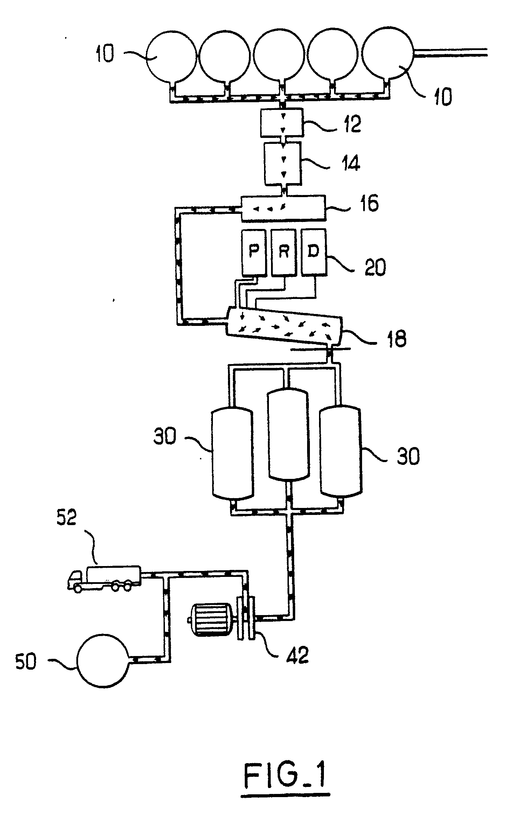

Cette opération de préchauffage du liant hydrocarboné est avantageusement réalisée dans un échangeur de chaleur en ligne tel que par exemple illustré à la figure 1.

Si on se reporte a cette même figure 1, on constate que l'installation comporte tout d'abord un parc à liants constitué par une pluralité de cuves de stockage 10, lesquelles seront avantageusement réalisées dans la pratique sous la forme de cuves aériennes calorifugées destinées à conserver provisoirement les liants à une température de l'ordre de 150° C.

Les sorties des cuves de stockage 10 sont couplées à une ligne de pompes et de doseurs 12 alimentant l'échangeur de chaleur 16 après passage au-travers d'un filtre 14.

Tous ces organes sont entourés d'une enveloppe de réchauffage et calorifugés pour maintenir le liant à la bonne température.

Le choix particulier de l'échangeur de chaleur n'est pas critique ; dans la pratique, un simple échangeur de chaleur en ligne a donné parfaite satisfaction.

L'étape suivante du procédé selon l'invention consiste à prémélanger le liant hydrocarboné avec les différents additifs de synthèse.

Au cours de cette étape, on réalise une prédispersion des additifs dans le flot de bitume à température contrôlée.

A cet effet, telle que représentée à la figure 1, l'entrée du prémélangeur 18 est couplée à la sortie de l'échangeur de chaleur 16 ainsi qu'à plusieurs réservoirs d'additifs 20.

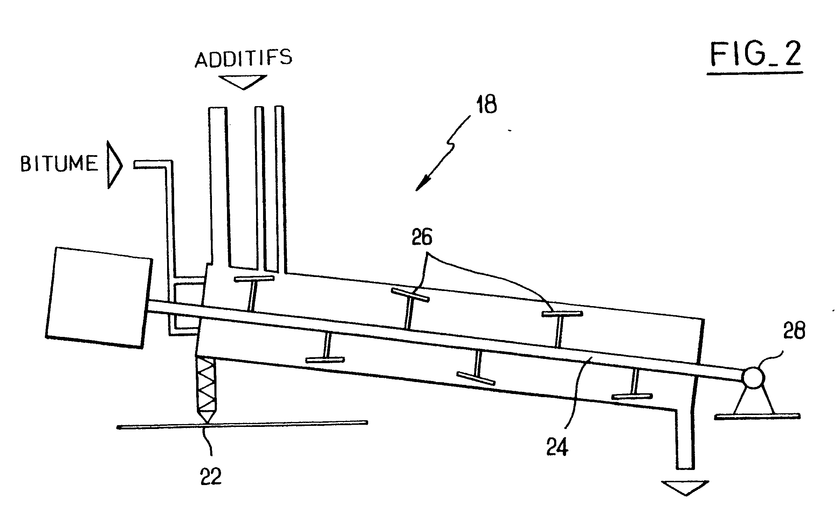

Le prémélangeur 18 a été représenté de façon plus détaillée à la figure 2.

Il se présente essentiellement sous la forme d'un tube d'axe incliné vers le bas dans le sens d'avancement des produits à mélanger.

Ce prémélangeur 18 est avantageusement monté de manière à pouvoir modifier son inclinaison, par exemple à l'aide d'une vis de réglage 22.

Le prémélangeur 18 est également équipé d'un arbre rotatif central 24 muni de palettes de malaxage 26 s'étendant à proximité de la paroi interne du prémélangeur 18.

Compte-tenu de la possibilité de réglage en inclinaison du prémélangeur 18, l'extrêmité inférieure de l'arbre rotatif 24 devra être montée sur un axe de rotation 28.

En modifiant la vitesse de rotation de l'arbre 24, ainsi que l'inclinaison du prémélangeur, il est possible d'agir sur le temps de séjour des constituants du mélange au sein du prémélangeur 18.

De tels réglages peuvent être rendus nécessaires par les conditions particulières de température et de viscosité du liant et des additifs utilisés. Bien entendu, tout comme les autres organes de l'installation, le prémélangeur 18 comporte également une double paroi constituant une enveloppe de réchauffage parcourue par une huile thermique.

Au surplus, l'ensemble du prémélangeur 18 est également entièrement calorifugé.

On observera que les palettes de malaxage 26 s'étendent au voisinage de la paroi intérieure du prémélangeur 18, selon une direction pratiquement parallèle à cette paroi.

Ces palettes 26 jouent donc également le rôle de racleurs de la paroi intérieure du prémélangeur 18, s'opposant à un éventuel encroûtage.

Toutefois, le rôle principal de ces palettes 26 est d'assurer une bonne prédispersion des additifs dans le flot de bitume, et d'assurer l'avancement du flot du prémélange du bitume et des additifs.

A ce stade de la description, il convient d'apporter un certain nombre de précisions quant à la nature et à la fonction des additifs de synthèse utilisés dans le cadre de la présente invention.

Ces additifs sont principalement constitués par des agents modifiants de nature polymère ou copolymère.

On citera tout d'abord les copolymères d'éthylène-vinyl-acétate (E.V.A.).

Ce sont des résines thermoplastiques produites par copolymérisation de l'éthylène avec le monomère d'acétate de vinyle.

Dans la pratique, on utilise des EVA dont le taux d'acétate de vinyle peut varier de quelques pourcents à environ 50% en poids du copolymère.

On observera que lorsque la teneur en acétate de vinyle diminue, la cristallinité du copolymère augmente, ce qui se traduit par un accroissement du module de rigidité, des températures de ramollissement, de fusion et de fragilité.

Généralement, les copolymères d'E.V.A. sont utilisés à raison de 3 à 20% en poids par rapport au poids de bitume.

On a pu constater qu'avec le procédé et l'installation objets de la présente invention, il est devenu parfaitement possible de maîtriser la modification du bitume par les copolymères d'E.V.A. Cette modification se traduit notamment par :

- une augmentation de la cohésion dans une gamme de températures élargie, et particulièrement dans la zone des températures de service ;
- un accroissement de la consistance et du module aux températures élevées entraînant une amélioration de la résistance à la déformation ;
- une meilleure flexibilité à froid ;
- une susceptibilité thermique moindre, illustrée par un intervalle de plasticité plus large, et
- une augmentation de la capacité d'allongement avant rupture conduisant à une meilleure résistance en fatigue.

Ces types de bitumes E.V.A. ont plus particulièrement démontré leur intérêt dans les applications routières suivantes :

- les liants anhydres ou sous forme d'émulsions pour enduits superficiels améliorés, domaine dans lequel leurs caractéristiques de viscosité, leur forte cohésion et leur faible susceptibilité thermique, ont permis leur utilisation sur des chaussées à trafic élevé et fortement sollicitées pour lesquelles les liants traditionnels ne sont plus adaptés, et
- les enduits épais et membranes intercalées mises en oeuvre à chaud dans lesquelles les propriétés d'élasticité et de cohésion sont mises à profit pour retarder la remontée des fissures de retrait des graves traitées aux liants hydrauliques, et
- les enrobés pour couches de roulement sur chaussées tous trafics : enrobés très minces, drainants, de rechargement, enrobés coulés à froid, qui font appel à toutes les qualités des bitumes E.V.A., notamment pour minimiser les risques d'orniérage et améliorer la tenue en fatigue,

- les enrobés pour support très déformables : ponts à dalle orthotrope, par exemple sur lesquels leur cohésion, leur souplesse et leur faible susceptibilité thermique sont des éléments déterminants pour assurer la tenue de ces revêtements aux différentes sollicitations, flexion inverse et cisaillement,
- étanchéités préfabriquées ou réalisées in situ, et
- les couches d'accrochage pour enrobés minces.

D'autres copolymères peuvent également être utilisés dans le cadre de la présente invention.

On citera en particulier les Ethylène-Méthyl-Méthacrylates (E.M.A.) qui présentent des propriétés analogues aux E.V.A., avec toutefois des caractéristiques élastiques plus élevées.

Les additifs utilisés dans le cadre de la présente invention peuvent également être constitués par des agents modifiants de nature polymère, par exemple des polymères constitués de trois séquences de polystyrène, polybutadiène et polystyrène qui sont généralement désignés sous l'abréviation S.B.S.

Les polymères de S.B.S. seront mis en oeuvre dans des conditions et dans des proportions à peu près identiques à celles relatives aux copolymères d'E.V.A.

Les propriétés des bitumes-S.B.S. se distinguent de celles des bitumes classiques notamment par :
- une susceptibilité thermique très faible dans le domaine des températures de service ; ceci conduit à un intervalle de plasticité significativement plus large découlant d'une élévation de la température de ramollissement à chaud et d'un abaissement de la température de fragilité à froid ;
- une cohésion plus élevée, dans une gamme de températures plus large ;
- un module plus fort aux températures élevées de service ;
- un comportement plus élastique se traduisant par une forte capacité d'allongement avant rupture, même à basse température, et un retour élastique important après déformation, et
- un meilleur comportement en fatigue.

Ce type de bitumes modifiés par adjonction de polymères S.B.S. trouvent de nombreuses applications routières, et notamment :
- en enduits superficiels, principalement en raison de leur faible susceptibilité thermique et de leur forte cohésion ;
- en couches d'accrochage ;
- en enduits épais pour assurer une étanchéité, et grâce à leur élasticité, retarder la remontée des fissures de retrait tout en résistant aux efforts tangentiels, et
- en enrobés pour couches de roulement, compte-tenu de leur bonne résistance à l'orniérage.

Les additifs peuvent également être constitués par des mélanges à base de caoutchoucs naturels ou synthétiques.

On pourra en particulier utiliser des poudrettes de caoutchouc, qui sont des mélanges de récupération provenant de l'industrie des pneumatiques. Les caoutchoucs seront additionnés au bitume de préférence à raison de 5 à 25% en poids par rapport au poids de bitume.

Dans la pratique, on complètera avantageusement ce type de formulation par addition d'une huile compatibilisante.

Les propriétés des bitumes ainsi modifiés par des caoutchoucs, dépendent bien sûr de leur formulation. Cependant, ils se distinguent des bitumes purs par :
- une plus faible susceptibilité thermique aux températures de service,
- une viscosité plus importante aux températures d'enrobage et de répandage,
- une forte cohésion dans une gamme de températures plus large,
- des possibilités de déformation à froid améliorées,
- une meilleure élasticité, et
- une faible susceptibilité au vieillissement se traduisant par une bonne conservation des propriétés dans le temps.

Ce type de bitumes additivés par des caoutchoucs trouvent leur application dans divers domaines routiers et, en particulier :
- en enduits superficiels sous forme de liants fluxés ou fluidifiés,
- en enduits épais pour retarder la remontée des fissures,
- en enrobés pour couches de roulement très minces, épais, drainants, pour tout trafic, qui conduisent à une amélioration de la résistance à la fatigue tout en contrôlant l'orniérage.

A titre d'autres exemples d'additifs, on mentionnera les latex qui sont des suspensions de particules de polymère dans l'eau, par exemple le latex naturel de l'hévéa, le latex de polychloroprène ou encore de caoutchouc S.B.R.

Les bitumes modifiés par incorporation de latex se caractérisent par :
- une susceptibilité thermique plus faible,
- une cohésivité plus élevée dans une large gamme de températures, et

- de meilleurs allongements à la rupture à basse température.

Ce type de bitumes latex trouvent leur application principalement :

- en enduits superficiels sur chaussée à trafic moyen ou fort,
- en couches d'accrochage en combinaison avec des enrobés minces, très minces ou drainants pour assurer le collage, l'étanchéité et une résistance suffisante aux efforts tangentiels, et
- en coulis bitumineux ou enrobés coulés à froid ou leurs caractéristiques améliorées autorisent des granularité pouvant atteindre ou dépasser 10mm.

Les polyoléfines peuvent également être utilisées comme additifs dans le cadre de la présente invention.

A titre d'exemple, on mentionnera le polyéthylène provenant souvent de la récupération de déchets industriels.

Le polyéthylène agit vis-à-vis du bitume comme un agent durcisseur permettant également de diminuer la susceptibilité thermique.

Les bitumes-polyéthylène présentent une consistance et un module plus forts que ceux des bitumes classiques, sur toute la gamme des températures de service.

Les bitumes-polyéthylène sont principalement utilisés en enrobés, soit en couches de base et de liaison, soit en couches de roulement, pour leur fort pouvoir de renforcement et leur bonne résistance à l'orniérage même en forte épaisseur.

D'autres exemples d'additifs peuvent par exemple être constitués par des résines terpéniques utilisées à raison de 2 à 5% en poids par rapport au poids de bitume.

D'autres additifs tels que les dopes d'adhésivité, qui sont des amines liquides tensio-actives, peuvent également être utilisés en tant qu'additifs dans le cadre de la présente invention.

Ils seront généralement mis en oeuvre dans des mélanges à hauteur d'environ 3 à 5/1000 en poids par rapport au poids de bitume.

Il est clair que, dans le cadre du procédé objet de la présente invention, on fera appel à un ou éventuellement plusieurs des additifs énoncés précédemment.

En fonction de la nature particulière de ces additifs, ceux-ci pourront être incorporés aux liants dans le prémélangeur 18, indifféremment sous forme liquide ou sous forme solide. Le prémélangeur 18 se présente avantageusement sous la forme d'une chambre cylindrique d'axe oblique, à inclinaison règlable, munie d'un arbre de malaxage et d'une enveloppe de réchauffage.

Dans la pratique, il s'est avéré qu'un simple mélange des différents constituants de ce type de liants spéciaux, était insuffisant pour maîtriser pleinement leurs qualités.

Conformément à la présente invention, après l'opération de prémélange du liant et des additifs, il convient de procéder à une mûrissement de ce mélange, opération au cours de laquelle on observe un gonflement des particules de polymère au contact du liant. Ce mûrissement est réalisé dans au moins un digesteur 30 qui se présente sous la forme d'une cuve d'axe vertical équipée de moyens d'agitation à double flux.

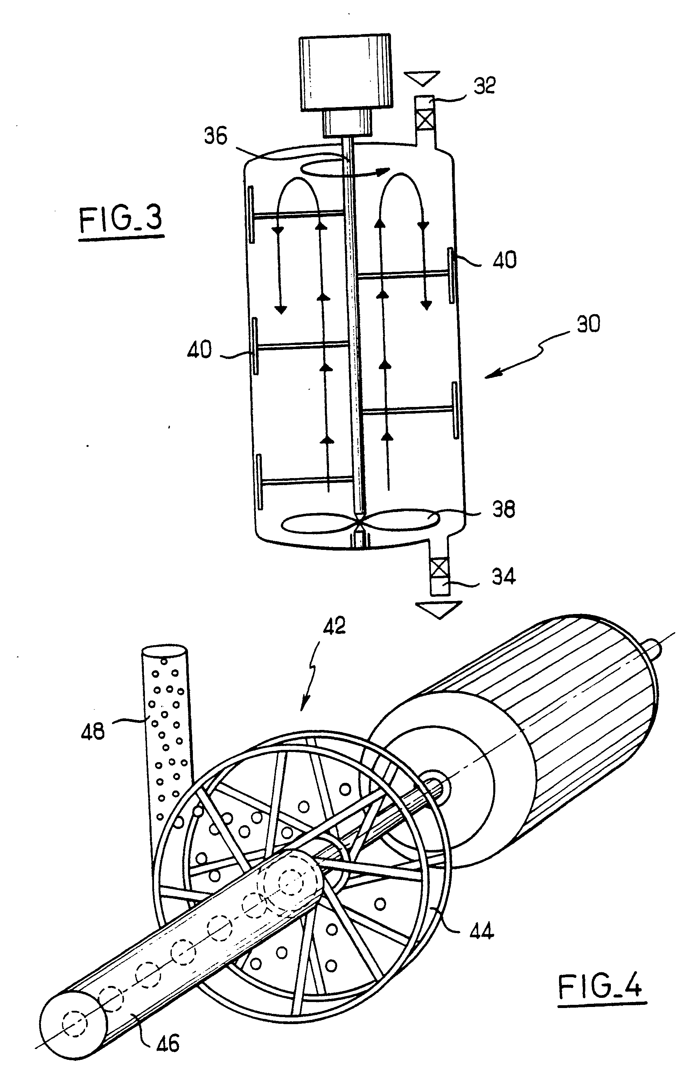

Le détail de réalisation de ce mode d'agitation est illustré à sla figure 3.

L'arrivée du mélange s'effectue par un conduit d'alimentation 32 disposé à la partie supérieure de la cuve verticale du digesteur 30, l'évacuation du mélange mûri est obtenu par le conduit de sortie 34 disposé à la base de la cuve.

Dans la pratique, on observe de bonnes conditions de mûrissement à condition de bien maîtriser l'agitation à double flux.

Cette agitation a été avantageusement obtenue à l'aide d'un arbre rotatif 36 équipé à son extrêmité inférieure d'une hélice de brassage 38, et d'une pluralité de palettes racleuses 40 s'étendant parallèlement à la paroi interne de la cuve du digesteur, à proximité immédiate de celle-ci.

On observe ainsi une circulation du mélange telle qu'illustrée par les flèches de la figure 3.

Cette étape de mûrissement repose en fait sur une véritable réaction chimique. En effet, certaines fractions aromatiques du bitume, principalement les asphaltènes et les maltènes, qui sont des fractions polaires présentes dans les bitumes routiers, réagissent avec les particules de polymère ou de copolymère, ce qui se traduit par leur gonflement.

Il convient de noter que cette opération de mûrissement ou de digestion est conduite pendant une durée variable qui peut être fonction de la qualité du bitume, de sa température, du mode d'agitation, voire même de la proportion et de la nature des additifs utilisés.

Généralement, dans la pratique, cette opération de mûrissement est réalisée pendant une durée d'environ 10 à environ 30 minutes.

Dans le mode de réalisation particulier illustré à la figure 1, l'installation comporte trois digesteurs montés en parallèle entre le prémélangeur 18 et le broyeur 42.

La transformation du liant doit être impérativement complétée par une opération d'homogénéisation par broyage. Un tel broyage est réalisé dans un broyeur 42 à haute énergie de cisaillement.

Ce broyeur 42 sera avantageusement du type comportant un intervalle de broyage 44 alimenté axialement par une arrivée 46, et définissant des zones de passage radial du mélange à broyer qui est évacué par un conduit 48.

Un tel type de dispositif de broyage se trouve par exemple décrit dans le brevet français n° 2 232 419. Un tel appareil est par exemple commercialisé par la Société SIEFER sous la dénomination "TRIGONAL®".

Cette dernière étape d'homogénéisation est primordiale.

En effet, de façon générale, un liant bitume-polymère peut être considéré comme un système biphasique constitué par une phase polymère gonflée par les huiles et une phase bitume regroupant les constituants de ce dernier qui n'interviennent pas dans le processus de gonflement. Ceci s'observe en particulier dans le cas des E.V.A.

Avant cette dernière étape, la phase continue est la phase bitume dans laquelle se trouvent dispersées les particules de polymere.

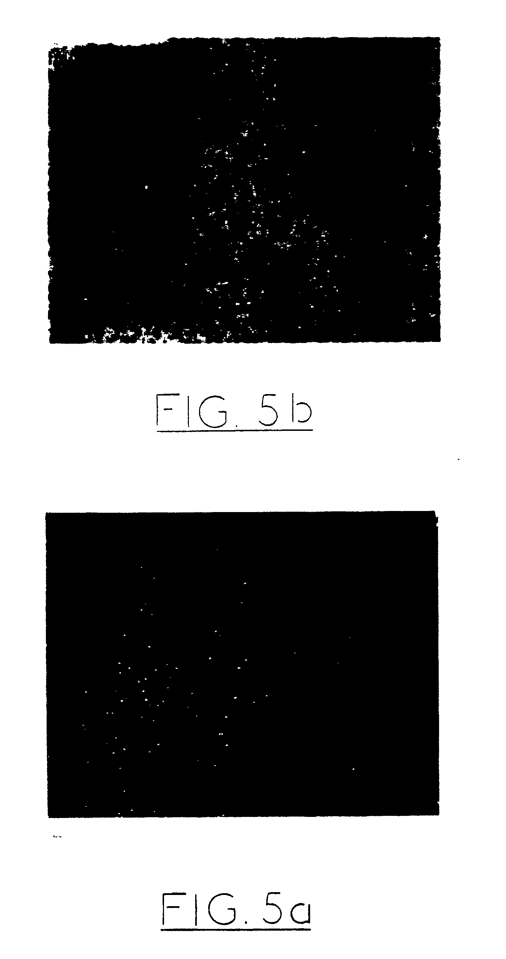

Une telle matrice de bitume est illustrée à la figure 5a.

Au cours de l'opération d'homogénéisation, on obtient une dispersion fine et homogène, soit en restant en phase bitume lors de faibles dosages en polymères, soit avantageusement avec inversion de phase dans le cas de bitumes plus richement additivés. A la sortie du broyeur à haute énergie de cisaillement, la phase continue devient la phase polymère dans laquelle se trouvent dispersées des particules de bitume. Cette matrice de polymère se trouve illustrée à la figure 5b. Cette inversion de phases s'accompagne en fait d'une modification très importante des propriétés physiques, mécaniques et rhéologiques du liant modifié.

Dans la pratique, on a ainsi pu observer une amélioration considérable des propriétés recherchées des liants modifiés obtenus selon l'invention. De surcroît, les liants modifiés ainsi obtenus ont fait preuve d'une parfaite stabilité au stockage. Contrairement à ce que l'on observait couramment avec les liants modifiés selon la technique antérieure, il n'existe plus aucun risque de démixtion ou de réinversion de phases, lors du stockage.

L'installation selon l'invention comporte enfin un poste de stockage 50 et/ou un poste de chargement 52, également relié à la sortie du broyeur par un système de conduit sous régulation de température.

Les cuves de stockage 50 comportent également de façon avantageuse un système d'agitation pour éviter tout risque de réagglomération de la phase bitume.

L'installation objet de la présente invention peut également être complétée en vue de réaliser des liants modifiés de nature un peu particulière.

C'est ainsi que l'installation peut en outre comporter une colonne de fluxage ou de fluidification.

Le bitume additivé, quittera le broyeur 42 non plus vers les postes de stockage 50 ou de chargement 52, mais en direction de la colonne de fluxage, non représentée, de type en soi connu, au sein de laquelle on ajoute au bitume une huile anthracénique de houille ou une coupe pétrolière, par exemple à raison de 2 à 14% ainsi qu'un dope d'adhésivité, par exemple à raison de 2 à 3/1000.

Bien entendu, pour ce type de produits particuliers, il conviendra d'envisager un stockage séparé.

En variante, il sera également possible de prévoir à la sortie du broyeur 42 une liaison avec une turbine de dispersion en vue de réaliser une mise en émulsion des bitumes modifiés.

Pour ce faire, on introduit dans la turbine 20 à 40% d'eau, un agent émulsifiant, par exemple de type amine, à raison d'une quantité inférieure à environ 1% en poids, de l'acide chlorhydrique pour amener le pH dans une gamme comprise entre environ 2 et 4, puis la quantité suffisante pour faire 100% de bitume.

Là encore, tous les conduits, pompes doseuses, turbines ou colonnes seront équipés de moyens de régulation thermique.

Dans la pratique, il s'est ainsi avéré que tous les inconvénients de la technique antérieure précitée ont pu être définitivement écartés.

Des tests comparatifs entre les liants modifiés obtenus selon la technique de l'invention et la technique antérieure ont démontré une amélioration déterminante de la qualité des liants modifiés selon l'invention.

Afin d'illustrer les avantages résultant du procédé selon l'invention, on regroupera, ci-après, quelques caractéristiques physico-chimiques relevées sur des bitumes modifiés par des copolymères EVA obtenus respectivement selon la technique antérieure et selon le procédé de l'invention.

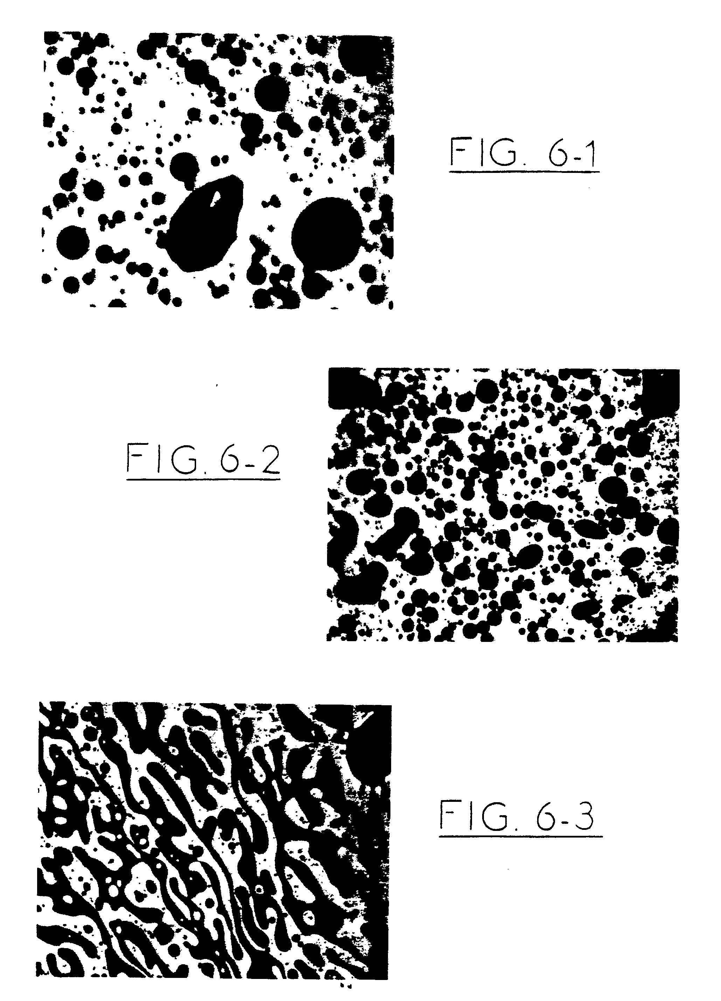

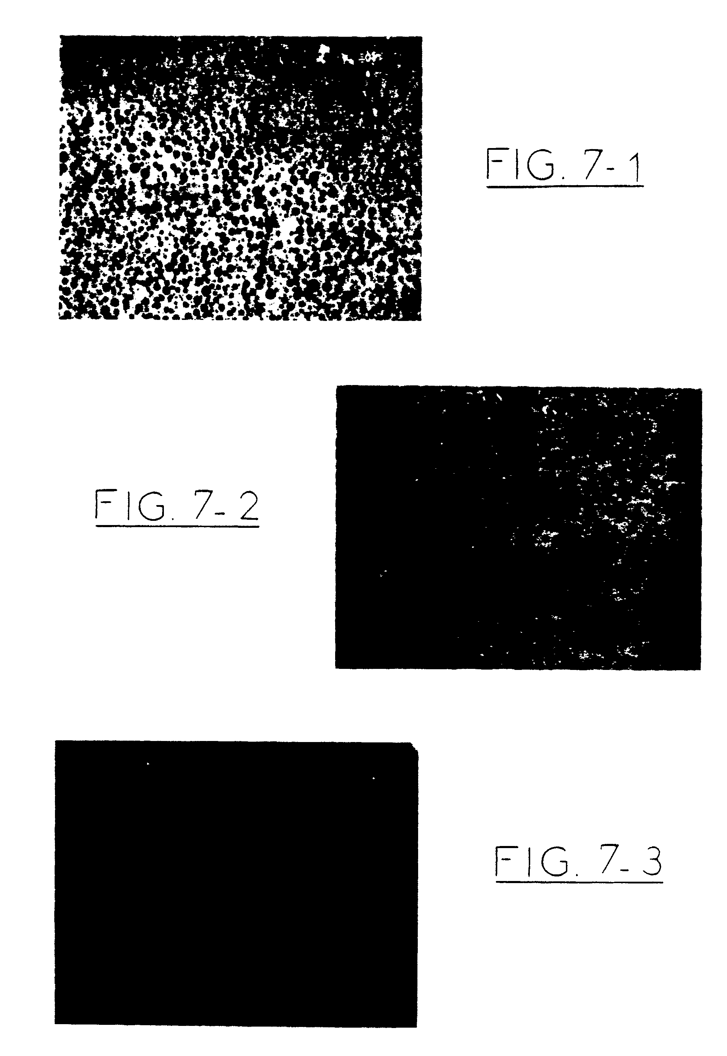

On relèvera en particulier, dans le tableau ci-après, une amélioration déterminante de la température de ramollissement. La dernière ligne de ce tableau se réfère en outre aux figures 6.1, 6.2 et 6.3 et 7.1, 7.2 et 7.3 illustrant de profondes modifications micro-morphologiques responsables des propriétés physico-mécaniques.

TABLEAU

| DE BITUMES 80-100 ADDITIONES D'EVA | | | | | | |
|---|---|---|---|---|---|---|
| Caractéristiques physico-mécaniques: | | | | | | |
| Procédé de fabrication | | selon l'invention. | | | malaxage selon la technique antérieure | | |
| Nature du liant | B | C | E | B | C | E |
| Pénétrabilité à 25°C (1/10 mm) | 39 | 65 | 66 | 53 | 85 | 82 |
| Température de ramollissement B.A. (°C) | 77,2 | 61,5 | 56,7 | 58,5 | 53,1 | 50 |
| Micromorphologique | PF | PF | PF | PG | PG | Mixte |
| | Fig. 7.1 | Fig. 7.2 | Fig. 7.3 | Fig. 6.1 | Fig. 6.2 | Fig. 6.3 |
| PF : Matrice polymère fine | | | | | | |
| PG : Matrice polymère grossière | | | | | | |
| B,C et E sont de bitumes 80-100 additionés dans des proportions variables, de copolymères EVA, résines terpéniques et de dopes d'adhésivité. | | | | | | |

## Revendications

1. Procédé de fabrication de liant hydrocarboné modifié par des additifs de synthèse en vue de ses applications routières, caractérisé en ce que l'on effectue les opérations suivantes :
-préchauffage du liant hydrocarboné dans une gamme de températures préférentielles comprises entre 150°C et 200°C ;
- prémélange du liant hydrocarboné et des additifs de synthèse ;
- mûrissement du mélange ;
- homogénéisation dudit mélange par broyage, et
- récupération du liant modifié.

2. Procédé selon la revendication 1, caractérisé en ce que le liant hydrocarboné est constitué par un bitume de distillation directe.

3. Procédé selon l'une des revendications 1 et 2, caractérisé en ce que les additifs de synthèse sont choisis parmi les agents modifiants de nature polymère ou copolymère, par exemple des copolymères EVA ou EMA ou encore un polymère SBS, des caoutchoucs naturels ou synthétiques, des latex, des polyoléfines, des résines, des dopes d'adhésivité, ainsi que leurs mélanges.

4. Procédé selon l'une des revendications 1 à 3, caractérisé en ce que l'étape de préchauffage est réalisée dans un échangeur de chaleur en ligne.

5. Procédé selon l'une des revendications 1 à 4, caractérisé en ce que le préchauffage du liant hydrocarboné est réalisé à une température comprise entre 180 et 190°C.

6. Procédé selon l'une des revendications 1 à 5, caractérisé en ce que le prémélange du liant hydrocarboné et des additifs de synthèse est réalisé dans une chambre cylindrique d'axe oblique munie d'un arbre de malaxage et d'une enveloppe de réchauffage.

7. Procédé selon la revendication 6, caractérisé en ce que ladite chambre cylindrique présente une inclinaison réglable.

8. Procédé selon l'une des revendications 1 à 7, caractérisé en ce que l'étape de mûrissement du mélange est réalisée au sein d'un digesteur muni d'une agitation à double flux.

9. Procédé selon la revendication 8, caractérisé en ce que le mûrissement dudit mélange est conduit de manière à observer un gonflement des agents modifiants polymères.

10. Procédé selon l'une des revendications 1 à 9, caractérisé en ce que l'opération d'homogénéisation du mélange par broyage est réalisée de manière à observer une inversion de phases dudit mélange.

11. Installation destinée à la mise en oeuvre du procédé selon l'une des revendications 1 à 10, caractérisée en ce qu'elle comprend en série :

- des moyens d'alimentation en liant hydrocarboné (10, 12, 14) ;
- un échangeur de chaleur en ligne (16) ;
- un prémélangeur (18) d'axe incliné vers le bas dans le sens d'avancement des produits à mélanger, qui est couplé au voisinage de l'entrée du liant à au moins un réservoir d'additifs (20) ;
- au moins un digesteur (30) se présentant sous la forme d'une cuve d'axe vertical équipée de moyens d'agitation à double flux ;
- un broyeur à haute énergie de cisaillement (42), et
- un poste de stockage (50) et/ou de chargement (52) des additifs modifiés.

12. Installation selon la revendication 11, caractérisée en ce que chacun des organes de l'installation est muni d'une enveloppe de réchauffage parcourue par un fluide thermique.

13. Installation selon l'une des revendications 10 à 12, caractérisée en ce que le prémélangeur (18) est du type à inclinaison variable, modifiable à l'aide d'une vis de réglage (22).

14. Installation selon l'une des revendications 10 à 13, caractérisée en ce que le prémélangeur (18) comporte un arbre rotatif (24) muni de palettes de malaxage (26).

15. Installation selon l'une des revendications 1 à 14, caractérisée en ce que le digesteur (30) comporte un arbre rotatif (36) équipé, à son extrêmité inférieure d'une hélice de brassage (38), et, sur le reste de sa longueur, de palettes racleuses (40) de la paroi intérieure verticale de la cuve du digesteur (30).

16. Installation selon l'une des revendications 10 à 15, caractérisée en ce que le digesteur (30) comporte une alimentation (32) en partie haute et une évacuation (34) en partie basse.

17. Installation selon l'une des revendications 10 à 16, caractérisée en ce qu'elle comporte plusieurs cuves de digesteur (30) montées en parallèle.

18. Installation selon l'une des revendications 10 à 17, caractérisée en ce que le broyeur (42) est du type comportant un intervalle de broyage (44) défini entre un stator et un rotor, ledit intervalle de broyage étant alimenté axialement et définissant des zones de passage radial du mélange à broyer.

FIG_1

FIG_2

ADDITIFS

BITUME

18

26

28

24

22

EP 0 418 158 A1

FIG_3

36

40

40

30

38

32

34

FIG_4

42

48

46

44

FIG. 5 b

FIG. 5a

FIG. 6-1

FIG. 6-2

FIG. 6-3

14

FIG. 7- 1

FIG. 7- 2

FIG. 7- 3

**Office européen
des brevets**

**RAPPORT DE RECHERCHE
EUROPEENNE**

Numéro de la demande

**EP 90 40 2524**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-3 242 114  (C.R. PEAKER)<br>* Colonne 2, ligne 29 - colonne 3, ligne 22 *<br>— — — | 1-3,5 | C 10 C 3/02<br>C 08 L 95/00<br>E 01 C 19/10 |
| A | | 9 | |
| A | DE-A-3 727 456  (F. KRUPP)<br>* Colonne 2, lignes 30-60; colonne 3, lignes 1-5 *<br>— — — — — | 1,11,12,<br>18 | |

**DOMAINES TECHNIQUES
RECHERCHES (Int. Cl.5)**

C 10 C
C 08 L

Le présent rapport de recherche a été établi pour toutes les revendications

| Lieu de la recherche | Date d'achèvement de la recherche | Examinateur |
|---|---|---|
| La Haye | 18 décembre 90 | HILGENGA K.J. |

CATEGORIE DES DOCUMENTS CITES
X : particulièrement pertinent à lui seul
Y : particulièrement pertinent en combinaison avec un
autre document de la même catégorie
A : arrière-plan technologique
O : divulgation non-écrite
P : document intercalaire
T : théorie ou principe à la base de l'invention

E : document de brevet antérieur, mais publié à la
date de dépôt ou après cette date
D : cité dans la demande
L : cité pour d'autres raisons
-----------------------------------------------------------
& : membre de la même famille, document
correspondant